# EUROPÄISCHE PATENTSCHRIFT

(11) **EP 3 057 771 B1**
(45) Veröffentlichungstag und Bekanntmachung des Hinweises auf die Patenterteilung: **10.03.2021**
(21) Anmeldenummer: 14787127.1
(22) Anmeldetag: 14.10.2014
(51) Int. Cl.: B29C 59/06, B44B 5/02, B29C 41/04, B44B 5/00, B29C 41/22

(54) **PRÄGEWALZE**
EMBOSSING ROLL
CYLINDRE DE GAUFRAGE

(30) Priorität: 18.10.2013 DE 102013017300
(43) Veröffentlichungstag der Anmeldung: 24.08.2016
(73) Patentinhaber: Konrad Hornschuch AG, 74679 Weissbach (DE)
(72) Erfinder: NEUMANN, Thorsten, 74635 Kupferzell (DE); BERGER, Elena, 74613 Öhringen (DE); MOGLER, Klaus, 74653 Ingelfingen (DE)
(74) Vertreter: Continental Corporation
(86) Internationale Anmeldenummer: PCT/EP2014/072039
(87) Internationale Veröffentlichungsnummer: WO 2015/055667

(56) Entgegenhaltungen:
- CH-A- 296 748
- US-A- 3 072 961

## Beschreibung

Die Erfindung betrifft eine Prägewalze mit einer inneren Hohlkammer, an die ein Unterdruck anlegbar ist und mit einer die Hohlkammer umgebenden Wandung mit einer strukturierten Oberfläche, umfassend Erhebungen und Vertiefungen sowie mit der inneren Hohlkammer kommunizierende Poren.

Derartige Prägewalzen sind bekannt und werden beispielsweise im Rahmen der Herstellung von strukturierten Substraten, wie Kunstleder mit einer der natürlichen Narbung von Leder nachempfundenen Oberfläche eingesetzt. Die Substrate werden während oder nach ihrer Herstellung über die Oberfläche der Prägewalze geführt und mittels des an die innere Hohlkammer derselben anlegbaren Unterdrucks, der über die Poren auf das Substrat einwirkt, auf die strukturierte Oberfläche gezogen bzw. an diese angesaugt, woraufhin sich die strukturierte Oberfläche der Prägewalze im Umkehrverfahren auf die damit in Kontakt stehende Oberfläche des Substrates überträgt.

Wenn demgemäß die strukturierte Oberfläche der Prägewalze z.B. ein Negativabbild einer Ledernarbung mit entsprechenden Erhebungen und Vertiefungen darstellt, erhält man auf der Oberfläche des Substrates die exakte Umkehr dieser strukturierten Oberfläche, d.h. an den Stellen, an denen die Prägewalze eine Erhebung aufweist, entsteht im Substrat eine entsprechende Vertiefung und umgekehrt. Dieses Verfahren wird daher häufig auch als Vakuum- bzw. Unterdruckprägeverfahren bezeichnet.

Die für das voranstehend beschriebene Verfahren eingesetzten Prägewalzen können z.B. aus metallischen Werkstoffen hergestellt werden, wobei die charakteristische Oberflächenstruktur z.B. durch spanabhebende Verfahren oder durch Ätzen und ähnliches erzeugt werden kann. Dies ist sehr aufwendig und kostenintensiv, überdies müssen die für die Übertragung des Unterdrucks auf das Substrat erforderlichen Poren aufwendig in die Wandung mechanisch eingebracht werden.

Die US 3 072 961 A offenbart den Oberbegriff des Anspruchs 1 und beschreibt eine Prägewalze mit einer Hohlkammer, einer darauf mittels Klebstoff aufgebrachtem faserigem Material, welches die Prägung trägt, sowie einer auf die Oberfläche des Materials aufgebrachten Imprägnierung auf Basis eines füllstoffhaltigen Epoxidharzes. Auch bei diesem Stand der Technik müssen Lochungen maschinell aufwändig eingebracht werden

CH 296 748 A offenbart ein Verfahren zum Herstellen einer Prägewalze.

Aufgabe der Erfindung ist es, eine alternative Ausgestaltung einer solchen Prägewalze vorzuschlagen, die rationell und wirtschaftlich herstellbar sein soll.

Zur Lösung der gestellten Aufgabe schlägt die Erfindung die Ausgestaltung einer Prägewalze gemäß den Merkmalen des Patentanspruches 1 vor. Vorteilhafte Ausgestaltungen und Weiterbildungen der Erfindung sind Gegenstand der abhängigen Ansprüche.

Der erfindungsgemäße Vorschlag sieht vor, dass die Wandung der erfindungsgemäßen Prägewalze mehrere diskrete und sukzessive von der Hohlkammer in Richtung auf die Oberfläche aufeinanderfolgende Schichten umfasst und die einzelnen Schichten auf Basis von mit Füllstoffen gefüllten Epoxidharzmischungen ausgebildet sind.

Durch die erfindungsgemäß vorgeschlagene mehrschichtige Ausbildung der Wandung aus mit Füllstoffen gefüllten Epoxidharzmischungen ist es möglich, mit geringem Rohstoffeinsatz eine den mechanischen Anforderungen einer derartigen Prägewalze genügende Wandung auszubilden, in deren oberflächennahen, d.h. die Oberfläche der Prägewalze bildende äußersten Schicht die gewünschte Oberflächenstruktur unmittelbar eingebracht, z.B. bei deren Herstellung eingeformt werden kann.

Ferner weist die Wandung der solchermaßen hergestellten Prägewalze von sich aus Poren auf, die die Übertragung des Unterdrucks aus der Hohlkammer auf ein im Bereich der Oberfläche der Prägewalze aufliegendes Substrat ermöglichen. Der zu dieser Porenausbildung führende Effekt ist nicht vollständig erklärt, es wird jedoch vermutet, dass sich innerhalb der einzelnen Schichten an den Korngrenzen zwischen den einzelnen Füllstoffpartikeln und dem Epoxidharz Kapillaren und kleinste Hohlräume ausbilden, die miteinander kommunizieren und gemeinsam die Poren bilden.

Beispielsweise ist es möglich, während der Ausbildung der äußersten Schicht aus der mit Füllstoffen versehenen Epoxidharzmasse die Oberflächenstruktur durch Anlage an einer entsprechenden Matrize abzuformen.

Ferner ist es möglich, die Prägewalze gemäß der Erfindung im sogenannten Schleudergussverfahren herzustellen, bei der eine rotationssymmetrische Kokille, die auf ihrer Innenseite die abzuformende Oberflächenstruktur aufweist, in Rotation um Ihre Mittelachse versetzt wird und die zur Ausbildung der Schichten gemäß der Erfindung vorgesehenen füllstoffhaltigen Epoxidharzmassen unter Einsatz entsprechender Temperaturniveaus an die Wandung der Kokille angelegt werden, wodurch sich zum einen die Schichten ausbilden und zum anderen die äußerste Schicht im Bereich ihrer Oberfläche die abzuformende Oberflächenstruktur der Kokille als Negativ abformt.

Es ist offensichtlich, dass eine derartige Ausbildung einer Prägewalze besonders rationell erfolgen kann.

Die von der Prägewalze abzubildende Oberflächenstruktur kann beispielsweise in Form einer metallischen Schicht, wie Stahl, einer geeignet temperaturbeständigen Kunststoffschicht, wie silikon- oder fluorbasiertem Kunststoff oder einer natürlichen Schicht, wie einer Lederschicht vorgehalten werden. Im Falle des vorangehend erläuterten Schleudergussverfahrens wird die Innenoberfläche der Kokille mit dieser Schicht ausgekleidet.

Nach einem Vorschlag der Erfindung ist vorgesehen, dass die oberflächennahe äußerste Schicht die strukturierte Oberfläche bildet und die Erhebungen und Vertiefungen umfasst, während die oberflächenferneren Schichten jeweils konstante Schichtdicken aufweisen.

Die nach der Erfindung ausgebildete Prägewalze ist vorzugsweise rotationssymmetrisch und zylindrisch ausgebildet, kann allerdings auch eine leicht von der zylindrischen Form abweichende Balligkeit oder Konizität aufweisen.

Nach einem weiteren Vorschlag der Erfindung ist vorgesehen, dass die Schichten jeweils ein Verhältnis der Epoxidharzmischung zu den Füllstoffen von 1:15 bis 2:1, vorzugsweise 1:10 bis 1:1 aufweisen. Die Verhältnisse können vom Fachmann je nach gewünschten Eigenschaften der Schichten ausgewählt werden. Beispielsweise wird für höhere mechanische Festigkeiten und höhere Verschleißfestigkeit ein entsprechend höherer Füllstoffgehalt gewählt werden.

Die Füllstoffe der Schichten der erfindungsgemäßen Prägewalze werden nach einem Vorschlag der Erfindung aus der Metall-/Nichtmetall-Nitride, -oxide und/oder -carbide umfassenden Gruppe ausgewählt, sie können z.B. Quarzsand, Siliciumcarbid, Aluminiumoxid, Bornitrid und/oder Eisenoxid(e) sowie Kohlenstoffverbindungen, wie Graphit und Diamant umfassen, ferner auch geringe Anteile von Metallpulver, wie Kupfer, Silber oder Gold.

Darüber hinaus können die Füllstoffe der oberflächennahen äußersten Schicht des weiteren Natriumchlorid, Natriumacetate und/oder Kaliumacetate umfassen und auch die Füllstoffe der benachbart zur oberflächennahen äußersten Schicht liegenden Schicht können des weiteren Salze, wie Natriumchlorid umfassen.

Die verwendeten Füllstoffe zeichnen sich durch eine gute Wärmeleitfähigkeit, hohe Härte und chemische Beständigkeit aus und fördern das Ausbilden der Kapillaren und Hohlräume, die für die Verwendung der Prägewalze im Vakuumprägeverfahren essentiell sind.

Dabei wird üblicherweise das zu verprägende Material auf seine Erweichungstemperatur gebracht und über die Prägewalze geführt und durch den anliegenden Unterdruck auf die Prägeoberfläche, d.h. die oberflächennahe Schicht aufgepresst. Durch die mittels der Füllstoffe geförderte hohe Wärmeleitfähigkeit der Prägewalze wird die Struktur sodann eingefroren, indem die Folie in verformtem Zustand unterhalb ihrer Erweichungstemperatur abgekühlt wird, während sie auf der Prägewalze aufliegt, d.h. die Wärmeabfuhr erfolgt über die erfindungsgemäße Prägewalze.

Ferner schlägt die Erfindung vor, dass die Füllstoffe einen Partikeldurchmesser von 0,5 bis 1000 µm aufweisen.

Eine Ausführungsform der erfindungsgemäßen Prägewalze sieht vor, dass sie ausgehend von einer oberflächennahen äußersten Schicht drei weitere Schichten umfasst, von denen die innerste Schicht eine höhere mechanische Festigkeit als die übrigen Schichten aufweist, so dass diese innerste Schicht der erfindungsgemäßen Prägewalze die erforderliche mechanische Stabilität verleiht.

Es versteht sich, dass die Anzahl der Schichten vom Fachmann bei entsprechendem Bedarf auch abweichend, d.h. mit mehr oder weniger als den vorangehend genannten vier Schichten ausgeführt werden kann.

Die Erfindung betrifft ferner auch ein Verfahren zum Herstellen einer solchen Prägewalze.

Erfindungsgemäß erfolgt die Herstellung der Prägewalze durch die Abfolge der nachstehenden Schritte:
a) Bereitstellen einer rotationssymmetrischen Kokille, die auf ihrer Innenseite die abzuformende Oberflächenstruktur aufweist,
b) Bereitstellen einer pulverförmigen Fraktion zur Ausbildung der oberflächennahen Schicht und Eintragen derselben in die Kokille
c) Versetzen der Kokille in Rotation um Ihre Mittelachse und Erwärmen derselben auf eine zur Schichtausbildung geeignete Temperatur
d) Ausbilden der oberflächennahen Schicht und Abformen der abzuformende Oberflächenstruktur der Kokille im Bereich ihrer Oberfläche
e) Bereitstellen der pulverförmigen Fraktionen zur Ausbildung der weiteren Schichten und Einbringen in die mit der oberflächennahen Schicht ausgebildeten Kokille und sukzessives Wiederholen des Schrittes c) unter Ausbildung der weiteren Schichten Aushärten und Abkühlen des Schichtenverbundes innerhalb der unter Rotation gehaltenen Kokille und anschließendes Entnehmen der Prägewalze aus der Kokille

Die Kokille wird dabei auf eine vom Fachmann auszuwählende rohstoffabhängige Temperatur erwärmt, vorzugsweise auf eine Temperatur von 35 bis 220 °C.

Nach einem Vorschlag der Erfindung kann vorgesehen sein, dass nach Schritt e) eine Ballastschicht in die mit den Schichten versehene Kokille eingefüllt wird, bevor die Aushärtung unter Rotation und Wärmezufuhr der Kokille erfolgt. Die Ballastschicht kann z.B. von Ballastsand gebildet werden, welcher vor dem Entnehmen der Prägewalze aus der Kokille leicht wieder entfernt werden kann.

Die pulverförmigen Fraktionen zur Ausbildung der einzelnen Schichten können beispielsweise durch Mischen von Epoxidharz, Härter und Füllstoffen unter Wärmezufuhr zu einem Granulat und anschließendem Vermahlen und Filtrieren hergestellt werden. Es werden Pulver einer durchschnittlichen Korngröße zwischen 0,1 und 1000 µm vermahlen.

Das Aushärten erfolgt für einen Zeitraum von etwa 1 bis 8 h, je nach Rohstoffauswahl und Schichtdicke der erfindungsgemäßen Prägewalze.

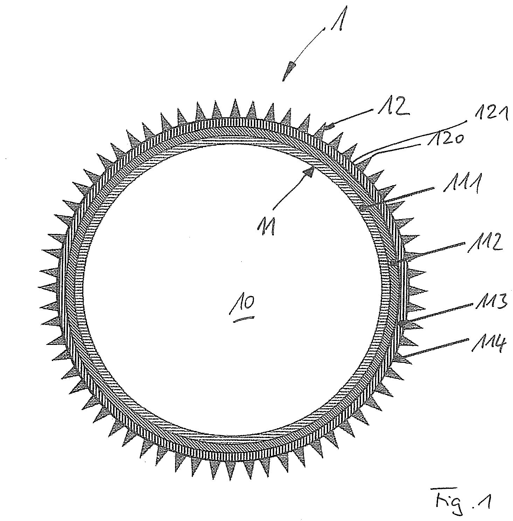

Eine mögliche Ausführungsform der Erfindung ist aus der Zeichnung ersichtlich.

Die einzige Figur zeigt den Querschnitt durch eine Prägewalze 1 mit einer inneren Hohlkammer 10, an die in nicht näher dargestellter, aber an sich bekannter Weise ein Unterdruck anlegbar ist. Bis auf die zur Unterdruckquelle (nicht dargestellt) führenden Leitung sind die Enden der Prägewalze 1 verschlossen. Die Hohlkammer 10 ist von einer im dargestellten Ausführungsbeispiel zylindrisch ausgeführten Wandung 11 umgeben, welche insgesamt vier diskrete und sukzessive von der Hohlkammer 10 in Richtung auf die zylindrische Oberfläche 12 der Prägewalze 1 aufeinanderfolgende Schichten 111, 112, 113, 114 umfasst. Sämtliche einzelnen Schichten 111, 112, 113, 114 sind auf Basis von mit Füllstoffen gefüllten Epoxidharzmischungen ausgebildet und jeweils benachbart miteinander verbunden.

Die Schichten 111, 112, 113, 114 können gleiche oder unterschiedliche Schichtdicken aufweisen.

Die oberflächennahe äußerste Schicht 11 weist eine strukturierte Oberfläche 12, umfassend Erhebungen 120 und Vertiefungen 121 auf, die zugleich die strukturierte Oberfläche der Prägewalze 1 bildet. Die Erhebungen 120 und Vertiefungen 121 können beispielsweise das Negativabbild einer Ledernarbung darstellen.

Ferner umfasst die Wandung 11 der Prägewalze 1 eine Vielzahl von mit der inneren Hohlkammer 10 kommunizierenden Poren, die sich durch alle Schichten 111, 112, 113, 114 bis an die Oberfläche 12 der Prägewalze 1 erstrecken, um ein über die Prägewalze 1 geführtes zu prägendes Substrat (nicht dargestellt) mittels des anliegenden Unterdruckes in der Hohlkammer 10 mit eine Positivprägung entsprechend der strukturierten Oberfläche 12 zu versehen.

Die Poren ergeben sich dabei aus feinen Kapillaren und Hohlräumen, die sich innerhalb der einzelnen Schichten 111, 112, 113, 114 befinden. Dazu sind die Schichten 111, 112, 113, 11) jeweils aus einer Mischung aus Epoxidharz und Füllstoffen hergestellt, die ein Verhältnis der Epoxidharzmischung zu den Füllstoffen von 1:15 bis 2:1, vorzugsweise 1:10 bis 1:1 aufweisen.

Als Füllstoffe der Schichten 111, 112, 113, 114 kommen z.B. Quarzsand, Siliciumcarbid, Eisenoxid, Aluminiumoxid, Calcium, Magnesiumoxid und/oder Titanoxid in Betracht, zusätzlich als Füllstoffe der oberflächennahen äußersten Schicht 114 des weiteren Natriumchlorid, Natriumacetate und/oder Kaliumacetate und als Füllstoffe der benachbart zur oberflächennahen äußersten Schicht 114 liegenden Schicht 113 des weiteren Salze, wie Natriumchlorid.

Die eingesetzten Füllstoffe weisen einen Partikeldurchmesser von 0,5 bis 1000 µm auf. Während der Ausbildung der einzelnen Schichten 111, 112, 113, 114 bilden sich entlang der Korngrenzen der Füllstoffe innerhalb der entsprechenden Epoxidharzschichten miteinander kommunizierende Kapillaren und Hohlräumen aus, die letztlich über alle Schichten 111, 112, 113, 114 miteinander kommunizieren und die Poren 122 bilden.

Die Rezeptur der innersten Schicht (111) ist im Übrigen so gewählt, dass sie eine höhere mechanische Festigkeit als die übrigen Schichten (112, 113, 114) aufweist.

Mit der vorangehend erläuterten Prägewalze ist es insbesondere möglich, zwei- oder dreidimensionale Strukturen auf Bahnware bzw. bahnförmigen Substraten, welche mehrschichtig aufgebaut sind, wie Kunstleder auf Basis von Polyurethan, Hart- und Weich-PVC, Polyolefinen sowie Folien auf Basis von z.B. Polyolefinen oder PVC kontinuierlich durch Unterdruck abzuformen.

## Patentansprüche

1. Prägewalze (1) mit einer inneren Hohlkammer (10), an die ein Unterdruck anlegbar ist und mit einer die Hohlkammer (10) umgebenden Wandung (11) mit einer strukturierten Oberfläche (12), umfassend Erhebungen (120) und Vertiefungen (121) sowie mit der inneren Hohlkammer (10) kommunizierende Poren, wobei die Wandung (11) mehrere diskrete und sukzessive von der Hohlkammer (10) in Richtung auf die Oberfläche (12) aufeinanderfolgende Schichten (111, 112, 113, 114) umfasst und die einzelnen Schichten (111, 112, 113, 114) auf Basis von mit Füllstoffen gefüllten Epoxidharzmischungen ausgebildet sind und miteinander kommunizierende Kapillaren und Hohlräume zur Ausbildung der Poren umfassen, **dadurch gekennzeichnet, dass** sie ausgehend von einer oberflächennahen äußersten Schicht (114) mindestens drei weitere Schichten (113, 112, 111) umfasst, von denen die innerste Schicht (111) eine höhere mechanische Festigkeit als die übrigen Schichten (112, 113, 114) aufweist.

2. Prägewalze (1) nach Anspruch 1, **dadurch gekennzeichnet, dass** die oberflächennahe äußerste Schicht (114) die strukturierte Oberfläche (12) bildet und die Erhebungen (120) und Vertiefungen (121) umfasst, während die oberflächenferneren Schichten (113, 112, 111) jeweils konstante Schichtdicken aufweisen.

3. Prägewalze (1) nach Anspruch 1 oder 2, **dadurch gekennzeichnet, dass** die Schichten (111, 112, 113, 114) jeweils ein Verhältnis der Epoxidharzmischung zu den Füllstoffen von 1:15 bis 2:1 aufweisen.

4. Prägewalze (1) nach einem der Ansprüche 1 bis 3, **dadurch gekennzeichnet, dass** die Füllstoffe der Schichten (111, 112, 113, 114) aus der Metall- oder Nichtmetall-Nitride, -Oxide, und/oder -Carbide sowie Kohlenstoffverbindungen und Metallpulver umfassenden Gruppe ausgewählt sind.

5. Prägewalze (1) nach Anspruch 4, **dadurch gekennzeichnet, dass** die Füllstoffe der Schichten (111, 112, 113, 114) aus der Quarzsand, Siliciumcarbid, Eisenoxid, Aluminiumoxid, Calcium, Magnesiumoxid und/oder Titanoxid umfassenden Gruppe ausgewählt sind.

6. Prägewalze (1) nach Anspruch 4, **dadurch gekennzeichnet, dass** die Füllstoffe der oberflächennahen äußersten Schicht des weiteren Natriumchlorid, Natriumacetate und/oder Kaliumacetate umfassen.

7. Prägewalze (1) nach Anspruch 4 oder 5, **dadurch gekennzeichnet, dass** die Füllstoffe der benachbart zur oberflächennahen äußersten Schicht (114) liegenden Schicht (113) des weiteren Salze, wie Natriumchlorid umfassen.

8. Prägewalze nach einem der Ansprüche 1 bis 6, **dadurch gekennzeichnet, dass** die Füllstoffe einen Partikeldurchmesser von 0,5 bis 1000 µm aufweisen.

9. Verfahren zum Herstellen einer Prägewalze nach einem der Ansprüche 1 bis 8, **gekennzeichnet durch** folgende Schritte:
a) Bereitstellen einer rotationssymmetrischen Kokille, die auf ihrer Innenseite die abzuformende Oberflächenstruktur aufweist,
b) Bereitstellen einer pulverförmigen Fraktion auf Basis von mit Füllstoffen gefüllten Epoxidharzmischungen zur Ausbildung der oberflächennahen Schicht (114) und Eintragen derselben in die Kokille
c) Versetzen der Kokille in Rotation um Ihre Mittelachse und Erwärmen derselben auf eine zur Schichtausbildung geeignete Temperatur
d) Ausbilden der oberflächennahen Schicht (114), die miteinander kommunizierende Kapillaren und Hohlräume zur Ausbildung von Poren umfassen, und Abformen der abzuformende Oberflächenstruktur der Kokille im Bereich ihrer Oberfläche
e) Bereitstellen der pulverförmigen Fraktionen auf Basis von mit Füllstoffen gefüllten Epoxidharzmischungen zur Ausbildung der weiteren Schichten (113, 112, 111) und Einbringen in die mit der oberflächennahen Schicht (114) ausgebildeten Kokille und sukzessives Wiederholen des Schrittes c) unter Ausbildung der weiteren Schichten (113, 112, 111), die miteinander kommunizierende Kapillaren und Hohlräume zur Ausbildung von Poren umfassen,
f) Aushärten und Abkühlen des Schichtenverbundes innerhalb der unter Rotation gehaltenen Kokille und anschließendes Entnehmen der Prägewalze aus der Kokille

10. Verfahren nach Anspruch 9, **dadurch gekennzeichnet, dass** die Kokille auf eine Temperatur von 35 bis 220 °C erwärmt wird.

11. Verfahren nach Anspruch 9 oder 10, **dadurch gekennzeichnet, dass** nach Schritt e) Ballast in die mit den Schichten (111, 112, 113, 114) versehene Kokille eingefüllt und vor dem Entnehmen der Prägewalze aus der Kokille wieder entfernt wird.

12. Verfahren nach einem der Ansprüche 9 bis 11, **dadurch gekennzeichnet, dass** die pulverförmigen Fraktionen zur Ausbildung der einzelnen Schichten (111, 112, 113, 114) durch Mischen von Epoxidharz, Härter und Füllstoffen unter Wärmezufuhr zu einem Granulat und anschließendem Vermahlen und Filtrieren hergestellt werden.

## Claims

1. Embossing roll (1) with an interior hollow chamber (10) to which a reduced pressure can be applied, and with, surrounding the hollow chamber (10), a wall (11) with a structured surface (12), comprising elevations (120) and depressions (121), and also pores communicating with the interior hollow chamber (10), where the wall (11) comprises a plurality of discrete layers (111, 112, 113, 114) following one another from the hollow chamber (10) in the direction of the surface (12), and the individual layers (111, 112, 113, 114) are configured on the basis of epoxy resin mixtures filled with fillers, and comprise capillaries communicating with one another and comprise cavities to form the pores, **characterized in that** it comprises, starting from an outermost layer (114) in the vicinity of the surface, at least three further layers (113, 112, 111) of which the innermost layer (111) has higher mechanical strength than the other layers (112, 113, 114) .

2. Embossing roll (1) according to Claim 1, **characterized in that** the outermost layer (114) in the vicinity of the surface forms the structured surface (12) and comprises the elevations (120) and depressions (121), while the layers (113, 112, 111) further from the surface respectively have constant layer thicknesses.

3. Embossing roll (1) according to Claim 1 or 2, **characterized in that** the layers (111, 112, 113, 114) respectively have a ratio of the epoxy resin mixture to the fillers of 1:15 to 2:1.

4. Embossing roll (1) according to any of Claims 1 to 3, **characterized in that** the fillers of the layers (111, 112, 113, 114) are selected from the group comprising metal nitrides, non-metal nitrides, metal oxides, non-metal oxides, metal carbides and non-metal carbides, metal powders and substances containing bonded carbon.

5. Embossing roll (1) according to Claim 4, **characterized in that** the fillers of the layers (111, 112, 113, 114) are selected from the group comprising quartz sand, silicon carbide, iron oxide, aluminium oxide, calcium, magnesium oxide and titanium oxide.

6. Embossing roll (1) according to Claim 4, **characterized in that** the fillers of the outermost layer close to the surface moreover comprise sodium chloride, sodium acetate and/or potassium acetate.

7. Embossing roll (1) according to Claim 4 or 5, **characterized in that** the fillers of the layer (113) located adjacent to the outermost layer (114) in the vicinity of the surface moreover comprise salts, for example sodium chloride.

8. Embossing roll according to any of Claims 1 to 6, **characterized in that** the particle diameter of the fillers is 0.5 to 1000 µm.

9. Process for the production of an embossing roll according to any of Claims 1 to 8, **characterized by** the following steps:
a) provision of a rotationally symmetrical metal-casting mould which has, on its internal side, the surface structure to be replicated,
b) for the formation of the layer (114) in the vicinity of the surface, provision of a pulverulent fraction based on epoxy resin mixtures filled with fillers, and introduction of the same into the metal-casting mould,
c) rotation of the metal-casting mould around its central axis, and heating of the same to a temperature suitable for formation of the layer,
d) formation of the layer (114) which is in the vicinity of the surface and which comprises capillaries and cavities communicating with one another for the formation of pores, and replication of the surface structure to be replicated of the metal-casting mould in the region of its surface,
e) provision of the pulverulent fractions based on epoxy resin mixtures filled with fillers for the formation of the further layers (113, 112, 111), and introduction into the metal-casting mould configured with the layer (114) in the vicinity of the surface, and successive repetition of the step c) with formation of the further layers (113, 112, 111) which comprise capillaries and cavities communicating with one another for the formation of pores,
f) hardening and cooling of the layer composite within the rotating metal-casting mould, and then removal of the embossing roll from the metal-casting mould.

10. Process according to Claim 9, **characterized in that** the metal-casting mould is heated to a temperature of 35 to 220°C.

11. Process according to Claim 9 or 10, **characterized in that** after step e) ballast is introduced into the metal-casting mould containing the layers (111, 112, 113, 114) and is in turn removed for the removal of the embossing roll from the metal-casting mould.

12. Process according to any of Claims 9 to 11, **characterized in that** the pulverulent fractions for the formation of the individual layers (111, 112, 113, 114) are produced by mixing epoxy resin, hardener and fillers, with introduction of heat, to give a granulate and then grinding and filtering.

## Revendications

1. Cylindre de gaufrage (1) doté d'une chambre creuse intérieure (10), à laquelle un vide peut être appliqué, et d'une paroi (11) à surface structurée (12) qui entoure la chambre creuse (10), comprenant des bosses (120) et des creux (121) ainsi que des pores en communication avec la chambre creuse intérieure (10), dans lequel la paroi (11) comprend plusieurs couches (111, 112, 113, 114) discrètes et qui se suivent successivement de la chambre creuse (10) en direction de la surface (12), et les couches (111, 112, 113, 114) individuelles sont réalisées sur la base de mélanges de résines époxydes chargées de matières de remplissage et comprennent des capillaires et des cavités en communication les uns avec les autres pour réaliser des pores, **caractérisé en ce qu'**en partant d'une couche la plus à l'extérieur (114), proche de la surface, il comprend au moins trois autres couches (113, 112, 111) dont la couche la plus à l'intérieur (111) présente une résistance mécanique supérieure à celle des couches restantes (112, 113, 114).

2. Cylindre de gaufrage (1) selon la revendication 1, **caractérisé en ce que** la couche la plus à l'extérieur (114), proche de la surface, constitue la surface structurée (12) et comprend les bosses (120) et les creux (121) alors que les couches (113, 112, 111) plus éloignées de la surface présentent respectivement des épaisseurs de couche constantes.

3. Cylindre de gaufrage (1) selon la revendication 1 ou 2, **caractérisé en ce que** les couches (111, 112, 113, 114) présentent respectivement un rapport entre le mélange de résines époxydes et les matières de remplissage de 1:15 à 2:1.

4. Cylindre de gaufrage (1) selon l'une quelconque des revendications 1 à 3, **caractérisé en ce que** les matières de remplissage des couches (111, 112, 113, 114) sont sélectionnées dans le groupe comprenant des nitrures, des oxydes et/ou des carbures métalliques ou non métalliques, ainsi que des composés de carbone et des poudres de métal.

5. Cylindre de gaufrage (1) selon la revendication 4, **caractérisé en ce que** les matières de remplissage des couches (111, 112, 113, 114) sont sélectionnées dans le groupe comprenant du sable silicieux, du carbure de silicium, de l'oxyde de fer, de l'oxyde d'aluminium, du calcium, de l'oxyde de magnésium et/ou de l'oxyde de titane.

6. Cylindre de gaufrage (1) selon la revendication 4, **caractérisé en ce que** les matières de remplissage de la couche la plus à l'extérieur, proche de la surface, comprennent de plus du chlorure de sodium, de l'acétate de sodium et/ou des acétates de potassium.

7. Cylindre de gaufrage (1) selon la revendication 4 ou 5, **caractérisé en ce que** les matières de remplissage de la couche (113) située à côté de la couche la plus à l'extérieur (114), proche de la surface, comprennent en outre des sels, tels que le chlorure de sodium.

8. Cylindre de gaufrage selon l'une quelconque des revendications 1 à 6, **caractérisé en ce que** les matières de remplissage présentent un diamètre de particule de 0,5 à 1000 µm.

9. Procédé de fabrication d'un cylindre de gaufrage selon l'une quelconque des revendications 1 à 8, **caractérisé par** les étapes suivantes consistant à :
a) prévoir une coquille à symétrie de révolution qui présente sur sa face intérieure la structure de surface à mouler,
b) prévoir une fraction pulvérulente sur la base de mélanges de résines époxydes chargées en matières de remplissage pour réaliser la couche proche de la surface (114), et insérer celle-ci dans la coquille,
c) mettre la coquille en rotation autour de son axe central, et chauffer celle-ci jusqu'à une température adaptée à la réalisation de couches,
d) réaliser la couche proche de la surface (114), qui comprend des capillaires et cavités en communication les uns avec les autres pour réaliser des pores, et mouler la structure de surface à mouler de la coquille au niveau de sa surface,
e) prévoir les fractions pulvérulentes sur la base de mélanges de résines époxydes pour réaliser les autres couches (113, 112, 111), et insérer dans la coquille réalisée avec la couche proche de la surface (114), et répéter successivement l'étape c) en réalisant les autres couches (113, 112, 111) qui comprennent des capillaires et cavités en communication les uns avec les autres pour réaliser des pores,
f) durcir et refroidir le composé de couches à l'intérieur de la coquille maintenue en rotation, et ensuite prélever le cylindre de gaufrage de la coquille.

10. Procédé selon la revendication 9, **caractérisé en ce que** la coquille est chauffée à une température de 35 à 220 °C.

11. Procédé selon la revendication 9 ou 10, **caractérisé en ce qu'**après l'étape e), de la matière inerte est versée dans la coquille munie des couches (111, 112, 113, 114) et est à nouveau retirée avant le prélèvement du cylindre de gaufrage de la coquille.

12. Procédé selon l'une quelconque des revendications 9 à 11, **caractérisé en ce que** les fractions pulvérulentes pour la réalisation des couches (111, 112, 113, 114) individuelles sont fabriquées par un mélange de résine époxyde, de durcisseurs et de matières de remplissage sous apport de chaleur en granulés et par un broyage et un filtrage consécutifs.
